# EUROPÄISCHE PATENTSCHRIFT

(11) **EP 2 574 799 B1**
(45) Veröffentlichungstag und Bekanntmachung des Hinweises auf die Patenterteilung: **23.04.2014**
(21) Anmeldenummer: 11182955.2
(22) Anmeldetag: 27.09.2011
(51) Int. Cl.: F16B 7/10, F16B 7/20, F16B 37/08

(54) **Teleskopierbare Verbindungsanordnung**
Telescopic connection assembly
Agencement de raccordement télescopable

(43) Veröffentlichungstag der Anmeldung: 03.04.2013
(73) Patentinhaber: Siepmann, Martin, 53113 Bonn (DE)
(72) Erfinder: Siepmann, Martin, 53113 Bonn (DE)
(74) Vertreter: Müller, Thomas Michael

(56) Entgegenhaltungen:
- WO-A2-2006/138699
- FR-A- 1 155 930
- GB-A- 2 443 897

## Beschreibung

Die Erfindung betrifft eine teleskopierbare Verbindungsanordnung umfassend ein rohrförmiges erstes Teleskopelement mit zumindest einer Innenverzahnung mit über einen Teil des Umfangs des ersten Teleskopelements verlaufenden Zähnen, ein zweites Teleskopelement mit zumindest einer Außenverzahnung mit über einen Teil des Umfangs des zweiten Teleskopelements verlaufenden Zähnen, wobei das zweite Teleskopelement in dem ersten Teleskopelement zwischen einer Arretierstellung und einer Verschiebestellung um eine Längsachse (L) drehbar aufgenommen ist, wobei in der Arretierstellung die zumindest eine Innenverzahnung und die zumindest eine Außenverzahnung miteinander in Eingriff sind und das zweite Teleskopelement im ersten Teleskopelement axial unverschiebbar gehalten ist, wobei in der Verschiebestellung die zumindest eine Innenverzahnung und die zumindest eine Auβenverzahnung außer Eingriff sind und das zweite Teleskopelement innerhalb des ersten Teleskopelements axial verschiebbar ist, und wobei an einem der beiden Teleskopelemente zumindest ein Federelement vorgesehen ist. Eine derartige Verbindungsanordnung ist aus der GB 2 443 897 A bekannt.

Eine weitere Verbindungsanordnung ist aus der DE 42 02 046 A1 bekannt. Bei der dort beschriebenen Verbindungsanordnung wirkt sich negativ aus, dass bei einer manuellen Verstellung der beiden Teleskopelemente zueinander bereits bei geringfügiger Verdrehung der Teleskopelemente die Verzahnungen unbeabsichtigt zumindest zum Teil in Eingriff kommen können und somit das axiale Verstellen erschwert oder verhindert wird.

Grundsätzlich können Verbindungsanordnungen der eingangs genannten Art in vielen technischen Gebieten vorkommen. Sie können im allgemeinen Maschinenbau als Verbindungselemente vorgesehen werden, um z.B. andere Verbindungsarten zu ersetzen. Insbesondere bei Möbeln, Gerüsten und Tragwerken, sowie bei Geräten mit längenverstellbaren Stäben, z.B. Fahrrad-Sattelstützen, können Anwendungsgebiete liegen. Ferner können Sie zur Verbindung von Rohrleitungen eingesetzt werden.

Teleskopierbare Verbindungsanordnungen in Form von Teleskopstäben (Teleskoprohre, Teleskopstiele, teleskopierbare Rohre/Stäbe) sind in einer Vielzahl von Varianten seit langem bekannt. Ihnen gemeinsam ist, dass sie aus mindestens zwei Teleskopelementen bestehen, die ineinander gesteckt sind und relativ zueinander verschoben werden können, um die Gesamtlänge zu verändern. Das innere Teleskopelement kann ein Hohl- oder Vollstab sein. Das äußere Teleskopelement ist ein Hohlstab, in den das innere Teleskopelement eingeschoben ist. Die beteiligten Stäbe haben in der Regel das gleiche Profil, meistens rund oder rechteckig.

Zur Vereinfachung der Beschreibung wird im Folgenden vorzugsweise der Begriff Stab verwendet. Ein Stab ist entweder ein Vollstab oder ein Hohlstab, d.h. ein Rohr. Bei einem Teleskopstab ist der äußere Stab immer ein Hohlstab, während der innere Stab i.d.R. entweder ein Vollstab oder ein Hohlstab sein kann.

Ein Teleskopstab kann aus einer großen Zahl von Teilstäben bestehen. Im Folgenden wird zur Vereinfachung der Beschreibung nur auf einstufige Teleskopstäbe Bezug genommen, bei denen es nur einen äußeren und einen inneren Stab gibt. In vielen Fällen können einstufige Teleskopstäbe jedoch zu mehrstufigen Teleskopstäben ausgebaut werden, indem der äußere Stab in einen weiteren Stab geschoben wird. Der äußere Stab wird so auch zu einem inneren Stab. Alternativ dazu kann in den inneren Stab ein weiterer Stab geschoben werden, so dass der innere Stab auch zu einem äußeren Stab wird. Ein mehrstufiger Teleskopstab entsteht auch, indem in einen äußeren Stab an beiden Enden jeweils ein innerer Stab geschoben wird oder indem ein innerer Stab an beiden Enden in jeweils einen äußeren Stab geschoben wird.

In vielen praktischen Anwendungen ist der innere Durchmesser bzw. das Profil eines äußeren Stabes signifikant größer als der äußere Durchmesser bzw. das Profil des darin befindlichen inneren Stabes..Mittels Lagervorrichtungen wird verhindert, dass die Längsachsen des äußeren und inneren Stabes einen unerwünschten Winkel zueinander bilden können oder der radiale Abstand der Stäbe zueinander sich verändern kann.

Der praktische Nutzen eines Teleskopstabs ergibt sich i.d.R. erst dadurch, dass seine Gesamtlänge verändert und in ausreichendem Maße fixiert werden kann, wobei die Fixierung auch wieder gelöst und so die Länge wiederholt verändert werden kann. Je nach Anwendung haben sich verschiedene Arten der Fixierung bewährt. In der Fixierung liegt ein wesentliches Unterscheidungsmerkmal der verschiedenen Arten von Teleskopstäben. Die Fixierung erfolgt in der Regel per Formschluss oder per Reibschluss oder aus deren Kombination. In den Fixierungsmechanismus sind vereinzelt elastische Elemente (Federn) eingearbeitet. Erwähnenswert ist noch die Möglichkeit, eine Fixierung per hydraulischem oder pneumatischem Druck herbeizuführen.

Eine hier nicht näher zu betrachtende Art von Teleskopstäben ist die, bei der die Fixierung per Reibschluss erfolgt. Solche Teleskopstäbe sind zwar weit verbreitet, doch eignen sie sich nicht für alle Anwendungen. Nachteilig ist insbesondere, dass die erforderliche Reibungskraft durch den Bediener aufgebracht werden muss. Sie muss größer sein als die zu übertragende axiale Kraft, vorzugsweise um einen vielfachen Sicherheitsfaktor größer. Die Reibungskraft belastet die Teile auch, wenn keine äußeren Kräfte wirken. Die erforderliche Reibungskraft wird unter anderem durch Alterung, Verschleiß und Verschmutzung beeinflusst.

Weit verbreitet sind auch Teleskoprohre, bei denen entlang des äußeren Rohres Löcher angebracht sind und am inneren Rohr ein Federelement befestigt ist, an dessen Ende sich ein Federbolzen befindet. Im gelösten Zustand ist das Federelement gespannt und der Bolzen gleitet bei der Längenänderung an der Innenseite des äußeren Rohres entlang. Das Fixieren erfolgt, sobald der Bolzen über ein Loch geführt und durch das Federelement hineingedrückt wird. Um die Fixierung wieder zu lösen, muss der Bolzen herausgedrückt und gleichzeitig die Teilstäbe gegeneinander verschoben oder verdreht werden.

Problematisch bei solchen Teleskopstäben ist insbesondere die Bedienung. Falls das Außenrohr nicht transparent ist, kann bei der Längenverstellung die Position des Bolzens nicht genau bestimmt werden, so dass oft erst nach mehreren Fehlversuchen der Bolzen im gewünschten Loch einrastet.

Die Löcher im Außenrohr sind bei vielen Anwendungen problematisch, weil die Zahl der Löcher stark beschränkt sein muss, um die Stabilität zu gewährleisten. Dadurch kann die Länge des Teleskopstabes nur in groben Stufen geändert werden. Löcher sind in vielen Fällen auch optisch nicht akzeptabel. Sie beeinträchtigen zudem die Nutzbarkeit als Leitung von Fluiden und als Schutz von im Teleskopstab befindlichen Gegenständen.

In US 6 550 727 ist ein Teleskopstab beschrieben, an dem, um eine Fixierung per Formschluss zu ermöglichen, sich an der Innenseite des äußeren Stabes und an der Außenseite des inneren Stabs abwechselnd umlaufende Vorsprünge und Rillen befinden. Der äußere Stab hat einen ovalen Querschnitt. Der innere Stab hat einen nicht-runden Querschnitt, der so dimensioniert ist, dass sich die beiden Stäbe relativ zueinander verschieben lassen und durch Verdrehen miteinander fixiert werden können, indem die Vorsprünge und die Rillen der beiden Stäbe ineinander greifen. Um das Verdrehen zu stoppen, dient eine Unterbrechung der Vorsprünge und Rillen. Als Führungselement wird ein Stopfen drehbar an einem Ende des inneren Stabes befestigt, um den inneren Stab im äußeren Stab zu zentrieren.

Aufgabe der vorliegenden Erfindung ist es, eine teleskopierbare Verbindungsanordnung der eingangs genannten Art bereitzustellen, bei der ein bedienungsfreundliches axiales Verstellen ermöglicht wird, durch Vermeidung von Blockaden, die durch unerwünschtes Ineinandergreifen der Verzahnungen verursacht werden können.

Außerdem kann die Bedienung erleichtert werden, indem das Erreichen und Verlassen definierter Positionen dem Bediener haptisch und ggf. akustisch signalisiert wird. Solche Positionen sind die Verschiebestellung, die Arretierstellung, sowie die axialen Positionen, welche einen blockadefreien Wechsel von der Verschiebe- in die Arretierstellung erlauben.

Die Aufgabe wird erfindungsgemäß durch eine teleskopierbare Verbindungsanordnung gemäß Anspruch 1 gelöst. Vorteilhafte Ausführungsformen der Verbindungsanordnung ergeben sich aus den Unteransprüchen.

Aufgrund der Tatsache, dass in der Verschiebestellung des zweiten Teleskopelements zumindest ein Federelement in zumindest eine Verschiebepositionsnut eingreift, ist gewährleistet, dass beim axialen Verschieben der Teleskopelemente zueinander diese nicht unbeabsichtigt zueinander verdrehen. Erst beim Überwinden einer vorbestimmten Kraft in Drehrichtung können die Teleskopelemente zueinander verdreht werden. Vorher kommen die Verzahnungen der beiden Teleskopelemente nicht miteinander in Eingriff und können nicht die axiale Verschiebung der Teleskopelemente zueinander behindern.

Die zumindest eine Verschiebepositionsnut ist in einer Innenfläche des ersten oder an einer Außenfläche des zweiten Teleskopelements sich axial erstreckend vorgesehen, so dass die beiden Teleskopelemente axial zueinander verschoben werden können und geführt sind.

Hierbei kann die mindestens eine Verschiebepositionsnut im Bereich einer der Innenverzahnungen und/oder in einem Bereich ohne Innenverzahnung des ersten Teleskopelements vorgesehen sein. Alternativ kann die mindestens eine Verschiebepositionsnut im Bereich einer der Außenverzahnungen und/oder in einem Bereich ohne Außenverzahnung des zweiten Teleskopelements vorgesehen sein.

Vorzugsweise weist das erste Teleskopelement eine Mehrzahl von jeweils über einen Teil des Umfangs einer Innenfläche des ersten Teleskopelements verlaufende Innenverzahnungen auf. Entsprechend weist das zweite Teleskopelement eine entsprechende Anzahl von jeweils über einen Teil des Umfangs einer Außenfläche des zweiten Teleskopelements verlaufende Außenverzahnungen auf.

Bei einer bevorzugten Ausführungsform ist vorgesehen, dass das erste Teleskopelement zwei über den Umfang diametral zueinander angeordnete Innenverzahnungen und das zweite Teleskopelement zwei über den Umfang diametral zueinander angeordnete Außenverzahnungen aufweist.

Die zumindest eine Verschiebepositionsnut ist durch den Bereich zwischen zwei über den Umfang benachbarten Innenverzahnungen ausgebildet. Alternativ ist die zumindest eine Verschiebepositionsnut durch den Bereich zwischen zwei über den Umfang benachbarten Außenverzahnungen ausgebildet.

Hierbei kann ein Federelement derart gestaltet sein, dass es einen radial federnden Federarm umfasst. Dieser kann an einem freien Ende des zweiten oder des ersten Teleskopelements axial vorstehend angeordnet sein.

Alternativ kann das Federelement eine in Umfangsrichtung verlaufender, radial federnder Federarm sein.

Es kann vorgesehen sein, dass eine der Anzahl vorgesehener Verschiebepositionsnuten entsprechende Anzahl an Federelementen vorhanden ist. Es können auch doppelt so viele Federelemente vorgesehen sein, um z.B. bei zwei Verschiebepositionsnuten und vier Federelementen ein Verstellen um 90 Grad zwischen zwei Raststellungen zu ermöglichen.

Um für den Bediener jede axiale Position spürbar zu gestalten, in der die beiden Teleskopelemente ohne Blockade zueinander verdreht werden können, kann vorgesehen sein, dass am ersten oder zweiten Teleskopelement zumindest eine federnd angeordnete Rastnase vorgesehen ist, die zwischen zwei Zähnen der mindestens einen Innenverzahnung oder Außenverzahnung eingreifen kann. Die Rastnase kann an einem der Federelemente vorgesehen sein.

In einer Ausgestaltung ist vorgesehen, dass das zweite (bzw. erste) Teleskopelement zumindest zwei diametral zueinander angeordnete Federelemente und das erste (bzw. zweite) Teleskopelement zumindest zwei diametral zueinander angeordnete Verschiebepositionsnuten in den Bereichen ohne Innenverzahnung (bzw. Außenverzahnung) aufweist.

Es kann auch vorgesehen sein, dass das zweite (bzw. erste) Teleskopelement vier über den Umfang gleichmäßig verteilt angeordnete Federelemente aufweist, wobei das erste (bzw. zweite) Teleskopelement vier über den Umfang gleichmäßig verteilte Nuten aufweist. Hierbei sind zwei der Nuten den Bereichen ohne Innenverzahnung (bzw. Außenverzahnung) und zwei der Nuten in den Bereichen mit Innenverzahnung (bzw. Außenverzahnung) vorgesehen.

Bei einer alternativen Ausgestaltung ist ein am zweiten Teleskopelement drehbar gelagerter Führungsschlitten angeordnet, der zumindest einen radialen Vorsprung aufweist, der in eine der Führungsnuten eingreift.

Hierbei kann der Führungsschlitten in unterschiedlichen Drehpositionen am zweiten Teleskopelement verrastbar sein.

Um eine gute Drehführung des inneren zweiten Teleskopelements gegenüber dem äußeren ersten Teleskopelement zu gewährleisten, kann vorgesehen sein, dass die Innenverzahnung im Bereich der Zahnköpfe zumindest über einen Teil der Länge in Umfangsrichtung zylinderabschnittsförmig gestaltet ist.

Hierbei kann das zweite Teleskopelement eine zylindrische Außenfläche aufweisen, mit der das zweite Teleskopelement über die zylinderabschnittsförmige Innenverzahnung geführt ist.

Vorzugsweise ist die Innenverzahnung (bzw. Außenverzahnung) über eine größere Länge entlang einer Längsachse verlaufend angeordnet als die Außenverzahnung (bzw. Innenverzahnung).

Die Außenverzahnung (bzw. Innenverzahnung) ist vorzugsweise an einem axialen Ende des zweiten (bzw. ersten) Teleskopelements vorgesehen.

Die erfindungsgemäße Verbindungsanordnung besteht im Wesentlichen aus einem äußeren Stab (erstes Teleskopelement) und einem inneren Stab (zweites Teleskopelement). Der äußere Stab hat ein Hohlprofil und der innere Stab hat entweder ein Hohl- oder ein Vollprofil. Beide Stabprofile können rund oder nicht-rund sein. Die Form der Profile muss es jedoch ermöglichen, den inneren Stab in den äußeren Stab zu schieben und darin um seine Längsachse zu drehen, wobei weniger als eine vollständige Umdrehung (360 Grad) ausreicht. Durch das Verschieben der Stäbe relativ zueinander wird die Gesamtlänge der Verbindungsanordnung geändert. Durch das Verdrehen der Stäbe gegeneinander wird dessen Länge fixiert (Arretierstellung) oder die Fixierung gelöst (Verschiebestellung).

An der Innenseite des äußeren Stabes und an der Außenseite des inneren Stabes befinden sich Zähne bzw. Lamellen quer, bevorzugt senkrecht, zur Längsachse. Die Zähne bzw. Lamellen sind so geformt, dass beim axialen Verschieben die Zähne des einen Stabes an den Zähnen des anderen Stabes vorbei passen. Die Form bewirkt außerdem, dass beim Verdrehen in den fixierten Zustand (Arretierstellung) zumindest einige Zähne beider Stäbe ineinander greifen. Wenn sich eine oder mehrere Zähne des einen Stabes spielfrei zwischen jeweils zwei Zähne des anderen Stabes befinden, ist eine formschlüssige Verbindung der Stäbe in axialer Richtung hergestellt.

Über die Anzahl und die Breite der Zähne an einem der beiden Stäbe wird die Anzahl und Weite der Schritte vorgegeben, mit der sich die Gesamtlänge einstellen lässt. Dieser Stab wird im Folgenden daher als maßgeblicher Stab bezeichnet und hat mindestens zwei Zähne. Der andere Stab wird positionierender Stab genannt und hat mindestens einen Zahn. Damit ein spielfreies Ineinandergreifen möglich ist, muss die Breite der Lücken zwischen den Zähnen des maßgeblichen Stabs der Breite des Zahnes bzw. der Zähne am positionierenden Stab entsprechen. Durch eine schmale Zahnbreite und Lückenbreite, ist eine feine, fast stufenlose, Längeneinstellung möglich. Um trotz schmaler Zähne eine hohe Haltekraft zu erzielen, können an beiden Stäben jeweils mehrere Zähne angebracht werden, die im fixierten Zustand ineinander greifen. Falls sich nur eine Zahn am positionierenden Stab befindet, können die Zähne am maßgeblichen Stab unterschiedlich breit sein, um unterschiedlich große Schrittweiten für die Längenverstellung vorzugeben.

Beim Schließvorgang kann es zu einer unerwünschten Blockade kommen, wenn ein Zahn des inneren Stabes gegen einen Zahn des äußeren Stabes stößt, anstatt in eine Lücke zu gleiten. Um die Wahrscheinlichkeit einer Blockade zu verringern, sollten die Flächen, die (blockierend) aufeinander stoßen können, möglichst klein (schmal) sein. Zu diesem Zweck sollten die Kanten dieser Flächen um bis zu 45 Grad abgeschrägt sein, so dass die Zähne sich zum Ende hin verjüngen. Wenn nun beim Drehvorgang die Zähne des einen Stabes nicht exakt in der Mitte zwischen den Zähne des anderen Stabes positioniert sind, gleiten die abgeschrägten Flächen aneinander vorbei, wodurch die Zähne in eine mittige Position gedrückt werden und der Schließvorgang ohne Blockade abgeschlossen werden kann.

Bei der Längenveränderung und beim Schließ- bzw. Öffnungsvorgang muss die relative Bewegung der beiden Stäbe zueinander möglichst spielfrei so geführt werden, dass deren Längsachsen immer aufeinander liegen. Falls die Achsen nicht aufeinander liegen, kommt es zu Blockaden, welche die Bedienung erschweren. Ein bekanntes Führungselement ist eine Verjüngung am Ende des äußeren Stabes, die als Gleitelement für den inneren Stab dient. Zur besseren Stabilisierung ist oft ein weiteres Gleitelement erforderlich. Abhängig vom Profil der beiden Stäbe gibt es bei einer erfindungsgemäßen Verbindungsanordnung zumindest drei solcher Mittel, den inneren Stab zu führen, wobei diese Mittel miteinander kombiniert werden können.

Wenn das Profil des äußeren Stabes an der Innenseite rund ist, dann können die Zähne des inneren Stabes zur Führung genutzt werden. Dazu müssen diese Zähne im Bereich der Zahnköpfe bogenförmig sein, mit einem Radius, der dem Innenradius des äußeren Stabes entspricht, so dass die Zähne immer die runde Innenseite des äußeren Stabes berühren. Diese Zähne müssen, im Querschnitt betrachtet, einzeln oder in Kombination mindestens 3 Punkte auf einen Bogen von mehr als 180 Grad abdecken. Es ist vorteilhaft, wenn mehrere solcher Zähne in axialer Richtung vorhanden sind, oder, wenn es nur einen Zahn gibt, dieser ausreichend breit ist.

Ein anderer Führungsmechanismus kann eingesetzt werden, wenn zumindest ein Abschnitt des inneren Stabes (in einem Bereich ohne Zähne), der sich innerhalb des äußeren Stabes befindet, ein rundes Außenprofil hat. Die Querschnitte der anderen Abschnitte können nicht-rund sein, doch dürfen sie nicht größer als die runden Abschnitte sein. Der Radius des runden Abschnitts muss dem Radius des Bogens entsprechen, den die Zähne im Zahnkopfbereich des äußeren Stabes bilden, so dass die Zähne immer die runde Außenseite des inneren Stabes berühren. Diese Zähne müssen, im Querschnitt betrachtet, einzeln oder in Kombination mindestens 3 Punkte auf einen Bogen von mehr als 180 Grad abdecken. Es ist vorteilhaft, wenn mehrere solcher Zähne in axialer Richtung vorhanden sind, oder, wenn es nur einen Zahn gibt, dieser ausreichend breit ist.

Ein dritter Führungsmechanismus kann auch dann verwendet werden, wenn weder das Profil des äußeren Stabes an der Innenseite rund ist, noch das Profil des inneren Stabes an der Außenseite rund ist. Der Mechanismus basiert darauf, dass ein Führungsschlitten spielfrei innerhalb des äußeren Stabes axial verschoben werden kann. Das Außenprofil des Schlittens entspricht zu diesem Zweck weitgehend dem Innenprofil des äußeren Stabes. Der Schlitten ist um die Längsachse drehbar an dem Ende des inneren Stabes befestigt, welches sich im äußeren Stab befindet. Auf diese Weise ist der innere Stab mit Hilfe des Schlittens drehbar im äußeren Stab gelagert. Ein Mitdrehen des Führungsschlittens wird dadurch verhindert, dass das äußere Profil des Führungsschlittens sich am nicht-runden Profil der Innenseite des äußeren Stabes orientiert, durch den er gleitet. Zur Vereinfachung der Beschreibung wird der Führungsschlitten hier als Teil des äußeren Stabes betrachtet.

Bei einer erfindungsgemäßen Verbindungsanordnung wird die Längenfixierung durch ein Verdrehen der beiden Stäbe um die Längsachse gelöst. Um eine unbeabsichtigte Lösung zu verhindern, sollte das Verdrehen aus dem fixierten Zustand (Arretierstellung) heraus erschwert werden. Dazu befindet sich an einem der beiden Stäbe mindestens ein Federelement und am anderen Stab befindet sich mindestens eine Nut (Arretierpositionsnut), so dass im fixierten Zustand das freie Ende mindestens eines Federelements sich in einer Nut befindet. Das Federelement wird beim Öffnungsvorgang ausgelenkt und gleitet dabei aus der entsprechend geformten Nut heraus. Die hierzu erforderliche Kraft verhindert eine unbeabsichtigte Öffnung, wenn sie ausreichend groß ist, und ermöglicht gleichzeitig eine absichtliche Öffnung durch den Bediener, wenn die Kraft nicht zu groß ist. Sie ist wesentlich bestimmt von der Rückstellkraft des Federelements, der Geometrie dessen freien Endes, sowie der Geometrie der Nut. Durch die Geometrie kann optional das Öffnen in eine bestimmte Richtung verhindert werden. Falls bei bestimmungsgemäßem Gebrauch hohe Torsionskräfte auf den geschlossenen Teleskopstab wirken, kann alternativ oder zusätzlich das Verdrehen mit herkömmlichen Mitteln verhindert werden, z.B. mit Klemmschellen. Wenn beim Schließvorgang das Federelement in die Arretierpositionsnut hinein gleitet, wird dem Bediener taktil und ggf. auch akustisch signalisiert, dass die Arretierstellung erreicht ist. Das Federelement kann sowohl ein separates Teil sein oder mit dem zugehörigen Stab ein gemeinsames Teil aus demselben Material bilden. Die Federelemente sind so geformt, dass sie im geöffneten Zustand beim Verschieben an den Zähnen des anderen Stabes vorbei passen.

Ein ähnlicher Mechanismus, wie der zur Verhinderung einer unabsichtlichen Öffnung, kann verwendet werden, um ein unabsichtliches Schließen zu verhindern. Ein solcher Mechanismus ist sinnvoll, weil der Bediener bei der Längenveränderung ein Verdrehen der beiden Stäbe um die Längsachse - und somit eine Blockade - kaum vermeiden kann, falls das Verdrehen nicht eine ausreichend hohe Kraft erfordert. Um das Verdrehen zu erschweren, befindet sich an einem der beiden Stäbe mindestens ein Federelement (oder eine Reihe von Federelementen in Längsrichtung) und am anderen Stab befindet sich mindestens eine Nut (Verschiebepositionsnut) in Längsrichtung, so dass im geöffneten Zustand das freie Ende mindestens eines Federelements sich immer in einer dieser Verschiebepositionsnuten befindet, auch während der Längenveränderung. Das Federelement wird beim Schließvorgang ausgelenkt und gleitet dabei aus der entsprechend geformten Nut heraus. Die hierzu erforderliche Kraft verhindert eine unbeabsichtigte Schließung, wenn sie ausreichend groß ist, und ermöglicht gleichzeitig eine absichtliche Schließung durch den Bediener, wenn die Kraft nicht zu groß ist. Sie ist wesentlich bestimmt von der Rückstellkraft des Federelements, der Geometrie dessen freien Endes, sowie der Geometrie der Verschiebepositionsnuten. Durch die Geometrie kann optional das Schließen in eine bestimmte Richtung verhindert werden. Wenn beim Öffnungsvorgang das Federelement in die Verschiebepositionsnut oder -kerbe hinein gleitet, wird dem Bediener taktil und auch ggf. akustisch signalisiert, dass die geöffnete Position erreicht ist. Das Federelement kann sowohl ein separates Teil sein oder mit dem zugehörigen Stab ein gemeinsames Teil aus demselben Material bilden. Die Federelemente sind so geformt, dass sie im geöffneten Zustand beim Verschieben an den Zähnen des anderen Stabes vorbei passen.

Federelemente können in vielen verschiedenen Bauformen eingesetzt werden. Je nach Anwendung, Dimensionierung, Produktionsverfahren usw. sind die Bauformen unterschiedlich gut geeignet. Die Position, an der sich das Federelement an einem der Stäbe befindet, hängt hauptsächlich u.a. von der gewählten Bauform des Federelements ab. Die am besten geeignete Position ist in der Regel an dem Ende des inneren Stabes, das sich immer innerhalb des äußeren Stabes befindet bzw. an dem Ende des äußeren Stabes, in dem sich der innere Stab befindet. Es ist auch möglich, dass ein Zahn selbst gleichzeitig als Federelement dient oder ein Federelement in einen Zahn integriert wird. Federelemente federn hautsächlich in radialer Richtung. Falls der äußere Stab mit einem Führungsschlitten wie oben beschrieben ausgestattet ist, kann die Verbindung mit dem inneren Stab z.B. dadurch hergestellt werden, dass ein Federelement gleichzeitig als Mitnehmer dient.

Bezüglich der Positionierung der Arretier- und Verschiebepositionsnuten gibt es viele Möglichkeiten. Eine Nut kann eine durchgehende Nut in axialer Richtung entlang der inneren bzw. äußeren Oberfläche des äußeren bzw. inneren Stabes sein. Oder eine Nut kann sich durch Aussparungen an den Zähnen einer Verzahnung ergeben. Oder sie kann durch einen sich längs erstreckenden verzahnungsfreien Bereich gebildet sein, der beidseitig von Verzahnungen gesäumt ist. Alternativ können Nuten an einem Führungsschlitten angebracht sein. Arretierpositionsnuten können in der Lücke zwischen Zähnen angebracht werden.

Anstelle einer Nut kann eine gewölbte oder ebene Fläche als Kontaktfläche für das Ende des Federelements am anderen Stab in geöffneter bzw. geschlossener Position dienen. Das Ende des Federelements sollte dann eine dazu passende gegengleiche Form haben, so dass das Federelement beim Verdrehen der Rohre ausgelenkt wird. Eine gewölbte oder ebene Fläche hat gegenüber einer Vertiefung aber den Nachteil, dass das Federelement nicht nur beim Verlassen einer Position, sondern auch zum Erreichen einer Position ausgelenkt werden muss.

Die Mechanismen zur Verhinderung einer unabsichtlichen Öffnung und einer unabsichtlichen Schließung können miteinander kombiniert werden. Einerseits können die beiden Mechanismen unabhängig voneinander am Teleskopstab angebracht sein. Andererseits können Federelemente und Nuten vorgesehen sein, die beide Funktionen übernehmen bzw. erfüllen.

Eine Einsparungsmöglichkeit liegt darin, nur eine einzelne Nut in Längsrichtung an einem Stab anzubringen. Am anderen Stab befinden sich dann mindestens zwei um einen Winkel versetzte Federelemente (bzw. Reihen von Federelementen in Längsrichtung), wobei der Winkel dem Drehwinkel zwischen Verschiebestellung und Arretierstellung entspricht, so dass im geöffneten Zustand (Verschiebestellung) das freie Ende des einen Federelements, und im geschlossenen Zustand (Arretierstellung) das des anderen Federelements, sich in der Nut befindet.

Eine ähnliche Einsparungsmöglichkeit liegt umgekehrt darin, nur ein Federelement (bzw. eine einzelne Reihe von Federelementen in Längsrichtung) an einem Stab anzubringen. Am anderen Stab befinden sich dann mindestens zwei um einen Winkel versetzte Nuten, wobei der Winkel dem Drehwinkel zwischen Verschiebestellung und Arretierstellung entspricht, so dass das freie Ende des Federelements im geöffneten Zustand (Verschiebestellung) sich in einer dieser Nuten (Verschiebepositionsnut) befindet und im geschlossenen Zustand (Arretierstellung) in der anderen -Nut (Arretierpositionsnut).

Es können mehr als die minimal erforderlichen Nuten und Federelemente in Umfangsrichtung angebracht werden, wodurch bei entsprechender Anzahl und Position der Verzahnungen die Drehwinkel zwischen Arretier- und Verschiebestellungen verkleinern werden.

Eine erfindungsgemäße Verbindungsanordnung kann als mehrstufiger Teleskopstab ausgestaltet sein, bei dem eine Vielzahl von Stäben ineinander geschoben ist. So kann die Längeneinstellung über ein größeres Längenintervall erfolgen als bei einer einstufigen Verbindungsanordnung. Zum einen kann der äußere Stab auch zugleich als innerer Stab gestaltet sein. Zum anderen kann der innere Stab auch zugleich als äußerer Stab gestaltet sein. Außerdem können sich in einem äußeren Stab zwei innere Stäbe befinden oder ein innerer Stab kann sich mit beiden Enden in jeweils einem äußeren Stab befinden. Eine mindestens zweistufige Verbindungsanordnung hat im Gegensatz zu einer einstufigen Verbindungsanordnung den Vorteil, dass eine Längenänderung auch dann möglich ist, wenn beide Enden des Teleskopstabs nicht drehbar gelagert sind, weil der mittlere (oder ein mittlerer) Stab gedreht werden kann, um den Öffnungs- und Schließvorgang durchzuführen.

Der Teleskopstab kann so gestaltet werden, dass er weder hervorstehende Teile hat, noch von außen zugängliche Funktionselemente wie Schrauben, Bolzen, Druckknöpfe, Bohrungen, Gewinde, Nuten, o.ä. erfordert. Eine solche Gestaltung ist gegeben, falls sich beim inneren und äußeren Stab alle Funktionselemente wie Zähne, Federelemente usw. immer verborgen im Inneren befinden. Eine solche Gestalt, die keine hervorstehenden Teile besitzt, reduziert die Verletzungsgefahr. Sie ermöglicht es auch, den vollständigen äußeren Stab und den von außen sichtbaren Teil des inneren Stabes zu umhüllen. Die Möglichkeit zur Umhüllung erlaubt es, die Stäbe mit kostengünstigen Materialien und Produktionsverfahren herzustellen und den Teleskopstab dennoch mit speziellen Eigenschaften auszustatten. Eine Umhüllung kann z.B. eine Folie oder ein Hohlstab sein. Sie kann je nach Anwendung aus unterschiedliche Materialien bestehen, z.B. Stahl, Kunststoff, Aluminium, Holz, Gummi, Textil, etc. und so die statischen Eigenschaften verbessern, der visuellen Gestaltung dienen und ggf. weitere Eigenschaften verändern, wie z.B. die Haptik. Damit der Bediener von außen Bedienoperationen über die Hülle an die Teilstäbe übertragen kann, muss die Hülle unbeweglich mit den Stäben verbunden werden. Die Verbindung kann trennbar oder untrennbar sein. Eine trennbare Verbindung ermöglicht die Wiederverwendbarkeit der Stäbe und der Hüllen für unterschiedliche Zwecke.

Wie bereits erläutert, kann es beim Schließvorgang zu einer unerwünschten Blockade kommen, wenn ein Zahn des inneren Stabes gegen einen Zahn des äußeren Stabes stößt, anstatt in eine Lücke zwischen zwei Zähnen zu gleiten. Die Wahrscheinlichkeit eine solchen Blockade kann wesentlich verringert werden, wenn dem Bediener während des Verschiebens in Längsrichtung sensorisch signalisiert wird, wenn eine Position erreicht ist, in der eine Arretierung möglich ist, d.h. in der die Zähne des einen Rohres genau auf der Höhe der Zahnlücken des anderen Rohres sind.

Dies kann erreicht werden, indem zumindest an einem der beiden Stäbe ein Federelement angebracht ist, dessen freies Ende beim Verschieben über die Verzahnung des anderen Stabes gleitet und dessen Längsquerschnitt so gestaltet ist, dass beim Verschieben das Federende (Rastnase) geringfügig zwischen den Zähnen einsinkt, sobald eine zulässige Arretierposition erreicht ist. Das Erreichen bzw. Verlassen einer Arretierposition kann durch weniger bzw. mehr erforderlichen Kraftaufwand fühlbar gemacht werden. Der Kraftaufwand kann durch die Abschrägung gesteuert werden. Das Einsinken kann für den Bediener eventuell sogar hörbar sein, wenn das Federende gegen die Verzahnung stößt.

Zur Signalisierung einer zulässigen Arretierposition kann ein nur dafür vorgesehenes Federelement eingesetzt werden oder es kann bei entsprechender Gestaltung ein ohnehin vorhandenes Federelement mit verwendet werden.

Bevorzugte Ausführungsformen sind im folgenden anhand der Zeichnungen näher erläutert. Hierin zeigen:
- Figur 1: eine perspektivische Ansicht einer ersten Ausführungsform einer erfindungsgemäßen Verschiebeanordnung in Verschiebestellung, wobei das äußere Teleskopelement im Längsschnitt dargestellt ist,
- Figur 2: dieselbe Ansicht der Verschiebeanordnung gemäß Figur 1 in Arretierstellung,
- Figur 3: einen Querschnitt der Verschiebeanordnung gemäß Figur 1 durch die Federelemente,
- Figur 4: einen Querschnitt der Verschiebeanordnung gemäß Figur 1 durch einen Zahn der Außenverzahnung,
- Figur 5: eine perspektivische Ansicht einer zweiten Ausführungsform einer erfindungsgemäßen Verschiebeanordnung in Verschiebestellung, wobei das äußere Teleskopelement im Längsschnitt dargestellt ist,
- Figur 6: dieselbe Ansicht der Verschiebeanordnung gemäß Figur 5 in Arretierstellung,
- Figur 7: einen Querschnitt der Verschiebeanordnung gemäß Figur 5 durch die Federelemente,
- Figur 8: einen Querschnitt der Verschiebeanordnung gemäß Figur 5 durch einen Zahn der Außenverzahnung,
- Figur 9: eine perspektivische Ansicht einer dritten Ausführungsform einer erfindungsgemäßen Verschiebeanordnung in Verschiebestellung, wobei das äußere Teleskopelement im Längsschnitt dargestellt ist,
- Figur 10: dieselbe Ansicht der Verschiebeanordnung gemäß Figur 9 in Arretierstellung,
- Figur 11: einen Querschnitt der Verschiebeanordnung gemäß Figur 9 durch die Federelemente,
- Figur 12: einen Querschnitt der Verschiebeanordnung gemäß Figur 9 durch einen Zahn der Außenverzahnung,
- Figur 13: eine perspektivische Ansicht einer vierten Ausführungsform einer erfindungsgemäßen Verschiebeanordnung in Verschiebestellung, wobei das äußere Teleskopelement im Längsschnitt dargestellt ist,
- Figur 14: dieselbe Ansicht der Verschiebeanordnung gemäß Figur 13 in Arretierstellung,
- Figur 15: einen Querschnitt der Verschiebeanordnung gemäß Figur 13 durch die Federelemente,
- Figur 16: einen Querschnitt der Verschiebeanordnung gemäß Figur 13 durch einen Zahn der Außenverzahnung,
- Figur 17: eine perspektivische Ansicht einer fünften Ausführungsform einer erfindungsgemäßen Verschiebeanordnung in Verschiebestellung, wobei das äußere Teleskopelement im Längsschnitt dargestellt ist,
- Figur 18: dieselbe Ansicht der Verschiebeanordnung gemäß Figur 17 in Arretierstellung,
- Figur 19: einen Querschnitt der Verschiebeanordnung gemäß Figur 17 durch die Federelemente bzw. die Außenverzahnung,
- Figur 20: einen Querschnitt der Verschiebeanordnung gemäß Figur 17 durch die Lücke zwischen zwei Zähnen der Außenverzahnung,
- Figur 21: eine perspektivische Ansicht einer sechsten Ausführungsform einer erfindungsgemäßen Verschiebeanordnung in Verschiebestellung, wobei das äußere Teleskopelement im Längsschnitt dargestellt ist,
- Figur 22: dieselbe Ansicht der Verschiebeanordnung gemäß Figur 21 in Arretierstellung,
- Figur 23: einen Querschnitt der Verschiebeanordnung gemäß Figur 21 durch die Federelemente,
- Figur 24: einen Querschnitt der Verschiebeanordnung gemäß Figur 21 durch einen Zahn der Außenverzahnung,
- Figur 25: eine perspektivische Ansicht einer siebten Ausführungsform einer erfindungsgemäßen Verschiebeanordnung in Verschiebestellung
- Figur 26: dieselbe Ansicht der Verschiebeanordnung gemäß Figur 25 in Arretierstellung,
- Figur 27: einen Querschnitt der Verschiebeanordnung gemäß Figur 25 durch die Federelemente,
- Figur 28: einen Querschnitt der Verschiebeanordnung gemäß Figur 25 durch einen Zahn der Außenverzahnung,
- Figur 29: eine perspektivische Ansicht einer achten Ausführungsform einer erfindungsgemäßen Verschiebeanordnung in Verschiebestellung, wobei das äußere Teleskopelement im Längsschnitt dargestellt ist,
- Figur 30: dieselbe Ansicht der Verschiebeanordnung gemäß Figur 29 in Arretierstellung,
- Figur 31: einen Querschnitt der Verschiebeanordnung gemäß Figur 29 durch die Federelemente,
- Figur 32: einen Querschnitt der Verschiebeanordnung gemäß Figur 29 durch einen Zahn der Außenverzahnung,
- Figur 33: eine perspektivische Ansicht einer alternativen Ausgestaltung eines Führungsschlittens gemäß der vierten Ausführungsform,
- Figur 34: eine perspektivische Ansicht einer alternativen Ausgestaltung eines äußeren Teleskopelements und
- Figur 35: eine perspektivische Ansicht einer weiteren Ausgestaltung eines äußeren Teleskopelements in demontiertem Zustand.

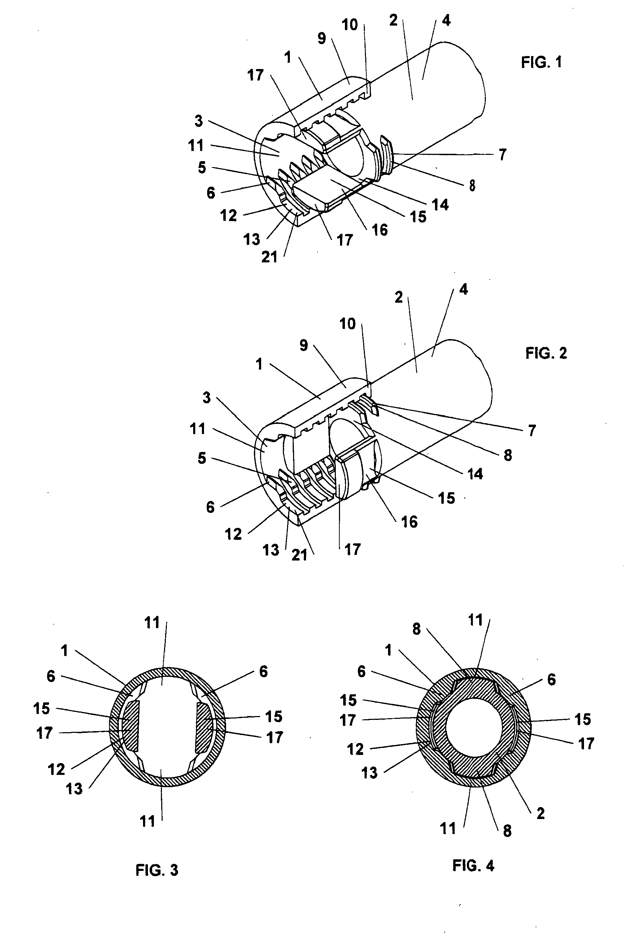

Eine erste Ausführungsform einer erfindungsgemäßen Verbindungsanordnung ist in den Figuren 1 bis 4 dargestellt. Die Figuren 1 bis 4 werden im folgenden zusammen beschrieben.

Die Verbindungsanordnung umfasst zwei Teleskopelemente 1, 2, ein äußeres Teleskopelement 1 und ein inneres Teleskopelement 2. Das äußere Teleskopelement 1 ist röhrförmig gestaltet und weist eine zylindrische Innenfläche 3 auf. In das äußere Teleskopelement 1 ist das innere Teleskopelement 2, welches eine zylindrische Auβenfläche 4 aufweist, teleskopierbar geführt.

An der Innenfläche 3 des äußeren Teleskopelements 1 befindet sich an diametral gegenüberliegenden Seiten jeweils eine Innenverzahnung 5, welche parallel zur Querschnittsfläche ausgerichtete Zähne 6 entlang einer Längsachse L aufweist - im vorliegenden Beispiel sind sechs Zähne 6 je Innenverzahnung 5 vorgesehen. Auf der Außenfläche 4 des inneren Teleskopelements 2 befindet sich an diametral entgegengesetzten Seiten jeweils eine Außenverzahnung 7, welche parallel zur Querschnittsfläche ausgerichtete Zähne 8 entlang einer Längsachse L aufweist - im vorliegenden Beispiel sind zwei Zähne 8 je Außenverzahnung 7 vorgesehen. Die Auβenverzahnung 7 befindet sich an demjenigen Abschnitt der Außenfläche 4, welcher sich innerhalb des äußeren Teleskopelements 1 befindet.

Die Höhe der Zähne 5, 8 entspricht in etwa der Differenz zwischen dem Radius der Innenfläche 3 und dem Radius der Außenfläche 4. Auf diese Weise wird das innere Teleskopelement 2 sowohl über seine Außenfläche 4 auf den Zahnköpfen der Zähne 6 der Innenverzahnung 5 als auch über die Innenfläche 3 auf den Zahnköpfen der Zähne 8 der Außenverzahnung 7 zentriert und innerhalb des äußeren Teleskopelements 1 gelagert, so dass es um die Längsachse L gedreht und entlang der Längsachse L verschoben werden kann.

An einem Ende 9 des äußeren Teleskopelements 1 ist an der Innenseite ein umlaufender Kragen 10 angebracht, der so hoch ist wie die Zähne 6 der Innenverzahnung 5. Der Kragen 10 verhindert, dass das innere Teleskopelement 2 an diesem Ende 9 aus dem äußeren Teleskopelements 1 herausgeschoben werden kann. Wenn die Außenverzahnung 7 des inneren Teleskopelements 2 gegen den Kragen 10 stößt, ist die maximale Länge der teleskopierbaren Verbindungsanordnung erreicht. Der Kragen 10 hat ferner die Funktion eines Lagers für das innere Teleskopelement 2.

An dem anderen Ende des äußeren Teleskopelements 1 könnte ebenfalls ein umlaufender Kragen vorgesehen sein, um auch hier ein Herausschieben des inneren Teleskopelements 2 zu verhindern. So würde die minimale Länge der teleskopierbaren Verbindungsanordnung begrenzt.

Damit die Verzahnungen 5, 7 der beiden Teleskopelemente 1, 2 zwecks Arretierung in Eingriff gebracht werden können, sind die Zähne 6, 8 des einen Teleskopelements 1, 2 genauso dick wie die Breite der Zahnlücken zwischen den Zähnen 8, 6 des anderen Teleskopelements 2, 1. An den Zahnenden in Umfangsrichtung sind die Zähne 6, 8 sich verjüngend ausgebildet, um die Verdrehung von der Verschiebestellung in die Arretierstellung zu erleichtern, indem die Wahrscheinlichkeit einer Verkantung verringert wird.

Zwischen den diametral gegenüberliegenden Innenverzahnungen 5 am äußeren Teleskopelement 1 ergibt sich an zwei Seiten eine Nut 11 entlang der Längsachse L. Diese Nuten 11 dienen als Bewegungsraum, in denen sich die Außenverzahnungen 7 des inneren Teleskopelements 2 bewegen, während es im äußeren Teleskopelement 1 verschoben wird. Dazu sind die Zähne 8 der Außenverzahnung 7 des inneren Teleskopelements 2 in Umfangsrichtung höchstens so lang wie die Nuten 11 breit sind.

Bei dieser ersten Ausführungsform dienen die Nuten 11 nicht nur als Bewegungsraum, sondern auch als Arretierpositionsnuten, um eine definierte Arretierposition des inneren Teleskopelements 2 zu gewährleisten. Ferner befinden sich in den Zahnkopfbereichen der Zähne 6 der Innenverzahnung 5 Aussparungen 12 in der Mitte der Zähne 6. Durch diese Aussparungen 12 ergeben sich entlang der Längsachse L zwei weitere einander gegenüberliegende Nuten, die als Verschiebepositionsnuten 13 bezeichnet werden können, welche eine definierte Verschiebeposition des inneren Teleskopelements 2 gewährleisten.

An einem freien Ende 14 des inneren Teleskopelements 2, welches sich innerhalb des äußeren Teleskopelements 1 befindet, sind an gegenüberliegenden Seiten in der Mitte zwischen den Außenverzahnungen 7 zwei Federelemente 15 angebracht. Die Federelemente 15 weisen radial federnde Federarme 16 auf, die sich axial entlang der Längsachse L vom freien Ende 14 aus erstrecken. An den freien Enden der Federarme 16 ist jeweils ein Federkopf 17 angeordnet. Ein nach außen gerichteter Teil des Federkopfes 17 entspricht dem Profil der Arretierpositionsnuten 11 bzw. der Verschiebepositionsnuten 13.

Wenn sich die Federköpfe 17 in den Verschiebepositionsnuten 13 befinden, ist das innere Teleskopelement 2 in Verschiebestellung, d.h. die Länge der Verbindungsanordnung kann verändert werden. Wenn sich die Federköpfe 17 in den Arretierpositionsnuten 11 zwischen den Innenverzahnungen 5 befinden, ist das innere Teleskopelement 2 in Arretierstellung, d.h. die Länge der Verschiebeanordnung kann nicht geändert werden. In der Verschiebestellung sind die Innen- und Außenverzahnungen 5, 7 nicht in Eingriff, in der Arretierstellung sind sie in Eingriff. Die Federköpfe 17 müssen länger ausgebildet sein, als die Breite der Zahnlücken zwischen den Zähnen 6 der Innenverzahnung 5, damit die Federköpfe 17 nicht in diese Zahnlücken hineingeraten und eine unbeabsichtigte Positionsänderung im Drehsinne erfolgen kann.

Grundsätzlich ist es auch denkbar, dass die Federelemente 15 nicht in Umfangsrichtung betrachtet zwischen den Außenverzahnungen 7 angeordnet sind, sondern mit diesen fluchten. In diesem Fall haben die Arretierpositionsnuten 11 die Funktion der Verschiebepositionsnuten 13 und die Verschiebepositionsnuten 13 die Funktion der Arretierpositionsnuten 11. Ebenfalls ist es möglich, dass Federelemente 15, in Umfangsrichtung betrachtet, sowohl im Bereich der Außenverzahnungen 7 als auch zwischen diesen angeordnet sind. Minimal erforderlich ist nur ein einzelnes Federelement.

Damit zwischen Verschiebe- und Arretierstellung durch Verdrehen der beiden Teleskopelemente 1, 2 gewechselt werden kann, sind die Zähne 6 der Innenverzahnungen 5 zu den Arretierpositionsnuten 11 und zu den Verschiebepositionsnuten 13 hin abgeschrägt. Aus dem gleichen Grund sind die Federköpfe 17 seitlich abgeschrägt. An den abgeschrägten Enden der Zähne 6 können die abgeschrägten Federköpfe 17 bei einer Verdrehung der Teleskopelemente 1, 2 zueinander entlang abgleiten. Wenn die Federköpfe 17 die Arretierpositionsnuten 11 zwischen den Innenverzahnungen 5 verlassen, werden dadurch die Federarme 16 der Federelemente 15 gespannt und bei Erreichen der durch die Aussparungen 12 gebildeten Verschiebepositionsnuten 13 wieder entspannt. Wenn umgekehrt die Federköpfe 17 die Verschiebepositionsnuten 13 verlassen, werden dadurch die Federarme 16 der Federelemente 15 gespannt und bei Erreichen der Arretierpositionsnuten 11 wieder entspannt. Je steiler die Abschrägungen sind und je größer die Federkonstante der Federelemente 15 ist, desto mehr Kraft ist zum Verdrehen erforderlich. Die Kraft sollte hoch genug sein, um die Federköpfe 17 ausreichend fest in den jeweiligen Positionsnuten zu halten, so dass die Position bei bestimmungsgemäßem Gebrauch nicht unabsichtlich gewechselt wird. Andererseits sollte die Kraft nur so hoch sein, dass die Position von einem Bediener, vorzugsweise werkzeuglos, geändert werden kann.

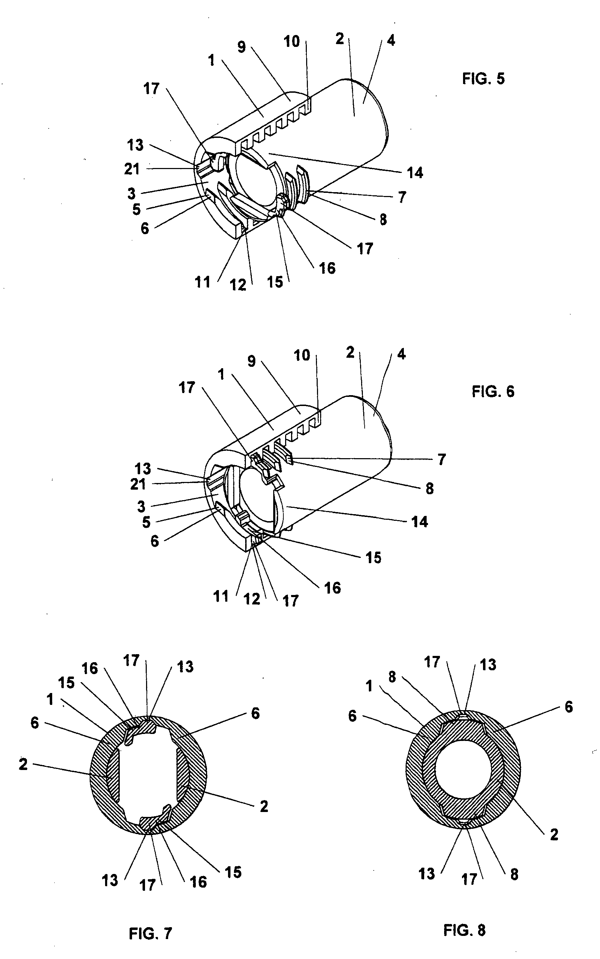

Die Figuren 5 bis 8 zeigen eine zweite Ausführungsform einer erfindungsgemäßen Verbindungsanordnung und werden im folgenden zusammen beschrieben. Bauteile, die mit Bauteilen der ersten Ausführungsform übereinstimmen, sind mit denselben Bezugszeichen versehen und bei den Figuren zur ersten Ausführungsform beschrieben.

Das äußere Teleskopelement 1 der zweiten Ausführungsform unterscheidet sich vom äußeren Teleskopelement der ersten Ausführungsform insbesondere dadurch, dass sich Aussparungen 12 zwischen den Zähnen 6 der Innenverzahnung 5 befinden statt im Zahnkopfbereich der Zähne 6. In Form des Profils dieser Aussparungen 12 befindet sich jeweils eine Verschiebepositionsnut 13 zwischen den diametral gegenüberliegenden Innenverzahnungen 5 entlang der Längsachse L. Diese Verschiebepositionsnuten 13 haben sowohl die Funktion von Verschiebepositionsnuten als auch von Führungsnuten. Die Aussparungen 12 haben die Funktion von Arretierpositionsnuten 11.

Die Federelemente 15 befinden sich am freien Ende des inneren Teleskopelements 14. Deren Federköpfe 17 am inneren Teleskopelement 2 sind den Verschiebepositionsnuten 13 am äußeren Teleskopelement 1 angepasst und unterscheiden sich daher von der ersten Ausführungsform. Die Federarme 16 der Federelemente 15 erstrecken sich hier tangential und sind, genauso wie die jeweiligen Federköpfe 17, in axialer Richtung so schmal, dass sie zwischen die Zähne 6 der Innenverzahnungen 5 passen. Der nach außen gerichtete Teil eines jeden Federkopfprofils entspricht dem Profil der Verschiebepositionsnuten 13.

Analog zur ersten Ausführungsform kann durch Verdrehen der beiden Teleskopelemente zwischen Verschiebe- und Arretierstellung gewechselt werden, wobei die Federköpfe 17 zwischen den Aussparungen 12 und den Verschiebepositionsnuten 13 hin- und herbewegt werden.

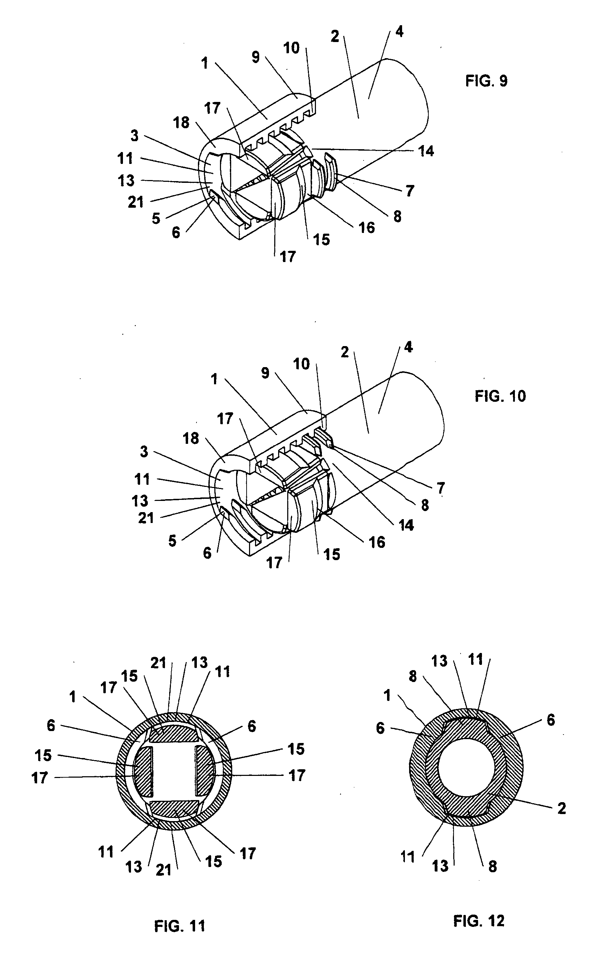

Die Figuren 9 bis 12 zeigen eine dritte Ausführungsform einer erfindungsgemäßen Verbindungsanordnung und werden im folgenden zusammen beschrieben. Bauteile, die mit Bauteilen der ersten Ausführungsform übereinstimmen, sind mit denselben Bezugszeichen versehen und bei den Figuren zur ersten Ausführungsform beschrieben.

Das äußere Teleskopelement 1 der dritten Ausführungsform unterscheidet sich vom äußeren ersten Teleskopelement der ersten Ausführungsform dadurch, dass sich keine Aussparung 12 in den Zähnen 6 der Innenverzahnungen 5 befinden. Der Winkelabstand zwischen zwei benachbarten Nuten, hier den beiden Positionsnuten 11 bzw. 13, beträgt also 180 Grad statt 90 Grad. Um dennoch durch Verdrehen der beiden Teleskopelemente 1, 2 um 90 Grad zwischen Verschiebe- und Arretierstellung wechseln zu können, sind am inneren Teleskopelement 2 vier Federelemente 15 im Winkelabstand von 90 Grad angebracht. In beiden Stellungen befinden sich dadurch immer zwei Federköpfe17 in den beiden Positionsnuten 11 bzw. 13 und die anderen zwei Federköpfe 17 liegen auf den Innenverzahnungen 5. Je nach Stellung haben die Positionsnuten 11 bzw. 13 die Funktion von Arretierpositionsnuten 11 oder Verschiebepositionsnuten 13.

Der Längsquerschnitt der Federköpfe 17 ist so gestaltet, dass beim Verschieben in beide Richtungen die Federköpfe 17 ohne Blockaden über die Innenverzahnungen 5 gleiten. Der Längsquerschnitt kann auch so gestaltet werden, dass die Federköpfe 17 beim Verschieben geringfügig zwischen den Innenverzahnungen 5 einsinken, sobald eine Position erreicht ist, in der eine Arretierung möglich ist, d.h. in der die Zähne 6, 8 des einen Teleskopelements genau auf der Höhe der Zahnlücken des anderen Teleskopelements sind. Das Einsinken sollte für den Bediener vorzugsweise hörbar sein. Das Erreichen bzw. Verlassen einer Arretierposition sollte durch weniger bzw. mehr Kraftaufwand fühlbar, aber nicht hinderlich sein.

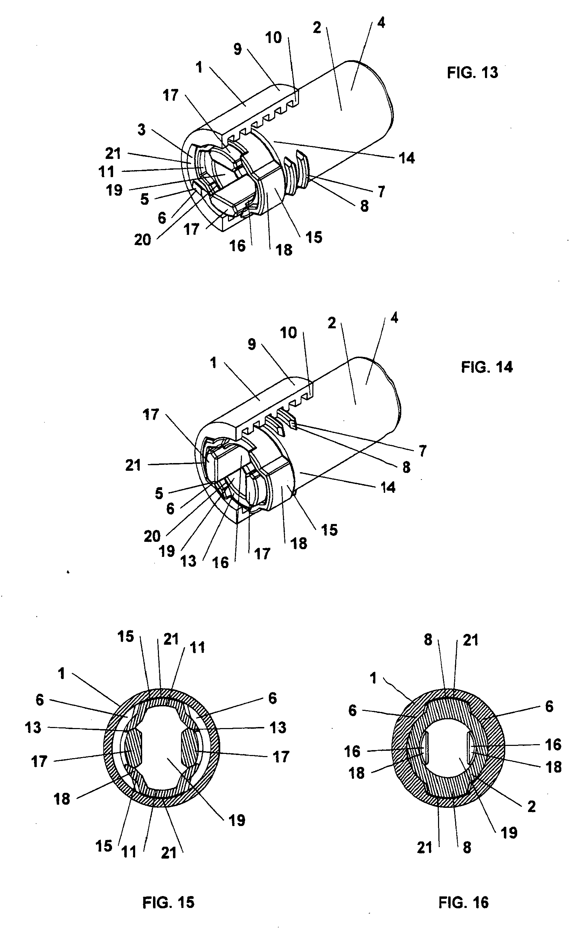

Die Figuren 13 bis 16 zeigen eine vierte Ausführungsform einer erfindungsgemäßen Verbindungsanordnung und werden im folgenden zusammen beschrieben. Bauteile, die mit Bauteilen der ersten Ausführungsform übereinstimmen, sind mit denselben Bezugszeichen versehen und bei den Figuren zur ersten Ausführungsform beschrieben.

Das äußere Teleskopelement 1 der vierten Ausführungsform unterscheidet sich vom äußeren Teleskopelement der ersten Ausführungsform dadurch, dass sich keine Aussparungen 12 in den Zähnen 6 der Innenverzahnungen 5 befinden. Das äußere Teleskopelement 1 der vierten Ausführungsform ist identisch mit dem äußeren Teleskopelement der dritten Ausführungsform. Die sich zwischen den gegenüberliegenden Innenverzahnungen 5 am äußeren Teleskopelement 1 ergebenden Nuten 21 haben, im Gegensatz zur ersten Ausführungsform nur die Funktion von Führungsnuten.

In diesen Führungsnuten 21 wird ein Führungsschlitten 18 entlang der Längsachse L geführt, der nicht um die Längsachse L gedreht werden kann. Das Außenprofil des Führungsschlittens 18 entspricht dem Innenprofil des inneren Teleskopelements 2. In der Mitte des Führungsschlittens 18 ist eine Bohrung 19 vorgesehen, durch die bei der Montage die beiden Federarme 16 des inneren Teleskopelements 2 gesteckt werden. Die Bohrung 19 dient als Lager, an dessen Innenfläche die nach außen gerichtete Fläche der Federarme 16 bei Verschiebe- und Arretierstellung aufliegt, so dass der Führungsschlittens 18 mit dem inneren Teleskopelement 2 axial ausgerichtet ist.

Die Federköpfe 17 dienen als Mitnehmer, d.h. sie klammern den Führungsschlitten 18 an das innere Teleskopelement 2, so dass dieser immer den axialen Bewegungen des inneren Teleskopelements 2 folgt und auch mit dem inneren Teleskopelement 2 verbunden bleibt, wenn das innere Teleskopelement 2 nicht montiert ist, d.h. nicht im äußeren Teleskopelement 1 ist. Zu diesem Zweck befindet sich im vorderen Bereich des Führungsschlittens 18 an dessen Innenseite eine umlaufende Nut 20.

Ebenfalls im vorderen Bereich des Führungsschlittens 18 an dessen Innenseite befinden sich vier Positionsnuten 11, 13 im Winkelabstand von 90 Grad. Deren Profil ist ähnlich dem Profil der Positionsnuten der ersten Ausführungsform. Der nach außen gerichtete Teil der Federköpfe 17 der beiden Federarme 16 entspricht dem Profil dieser Positionsnuten 11, 13. Analog zur ersten Ausführungsform kann somit durch Verdrehen der beiden Teleskopelemente 1, 2 zwischen Verschiebe- und Arretierstellung gewechselt werden, wobei die Federköpfe 17 in diesem Beispiel zwischen den Verschiebepositionsnuten 13 und den Arretierpositionsnuten 11 im Führungsschlitten 18 hin- und herbewegt werden.

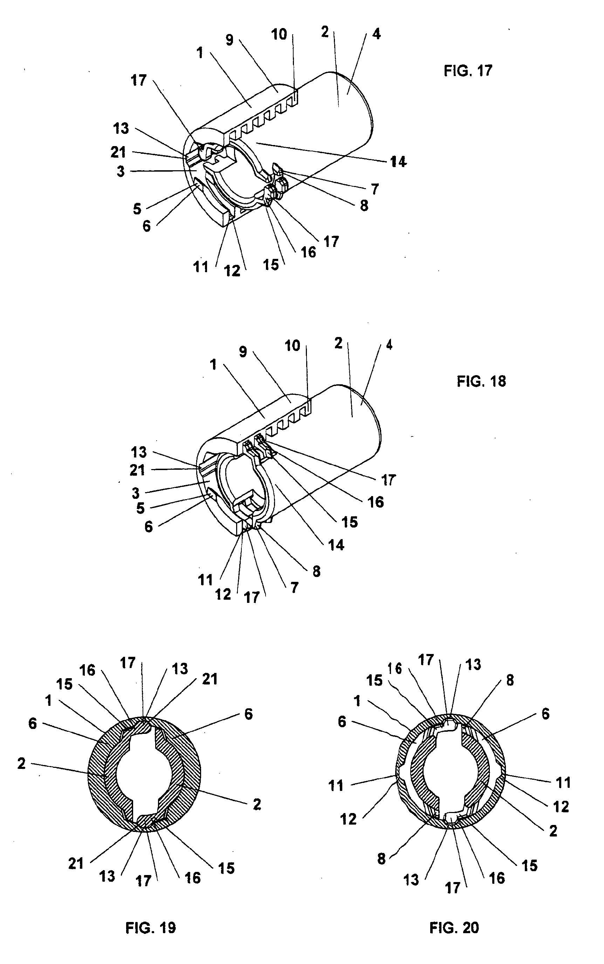

Die Figuren 17 bis 20 zeigen eine fünfte Ausführungsform einer erfindungsgemäßen Verbindungsanordnung und werden im folgenden zusammen beschrieben. Bauteile, die mit Bauteilen der zweiten Ausführungsform übereinstimmen, sind mit denselben Bezugszeichen versehen und bei den Figuren zur zweiten Ausführungsform beschrieben.

Das äußere Teleskopelement 1 der fünften Ausführungsform ist identisch mit dem der zweiten Ausführungsform. Das innere Teleskopelement 2 der fünften Ausführungsform unterscheidet sich von dem der zweiten Ausführungsform dadurch, dass die Federelemente 15 in vier Zähne 6 der Außenverzahnung 7 integriert sind. Dadurch ist das innere Teleskopelement 2 insgesamt kürzer.

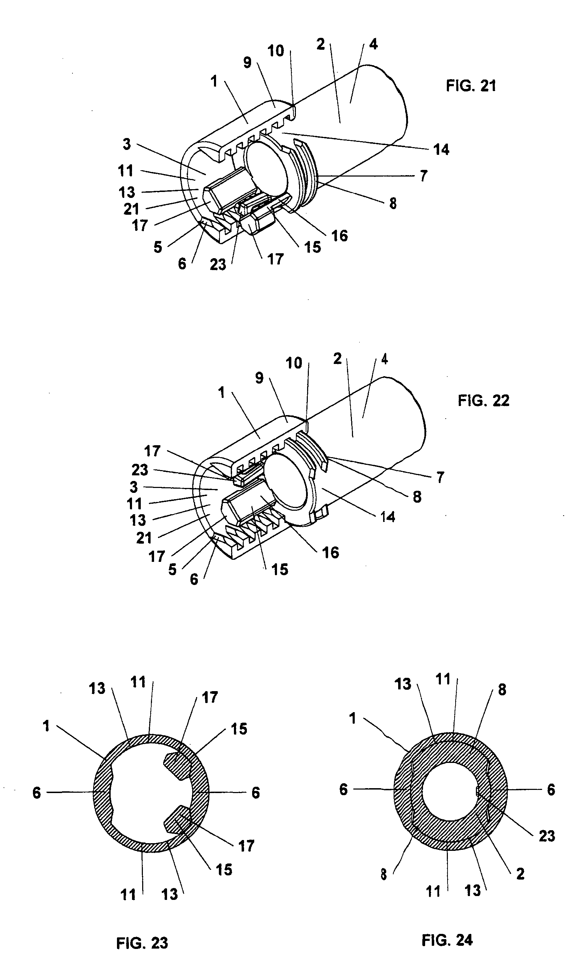

Die Figuren 21 bis 24 zeigen eine sechste Ausführungsform einer erfindungsgemäβen Verbindungsanordnung und werden im folgenden zusammen beschrieben. Bauteile, die mit Bauteilen der dritten Ausführungsform übereinstimmen, sind mit denselben Bezugszeichen versehen und bei den Figuren zur dritten Ausführungsform beschrieben.

Das äußere Teleskopelement 1 der sechsten Ausführungsform unterscheidet sich vom äußeren Teleskopelement 1 der dritten Ausführungsform darin, dass die Innenverzahnungen 5 schmaler sind. Deren Breite ist kleiner als 90 Grad des Stabquerschnitts. Dadurch sind die Positionsnuten 11, 13 breiter, nämlich größer als 90 Grad, so dass in Verschiebestellung mehr Bewegungsraum für die Federköpfe 17 zur Verfügung steht.

Das innere Teleskopelement 2 der sechsten Ausführungsform unterscheidet sich vom inneren Teleskopelement 2 der dritten Ausführungsform darin, dass die Außenverzahnungen 7 breiter sind, nämlich nur etwas schmaler als die Positionsnuten 11, 13, um den größeren Bewegungsraum zu nutzen. Anstelle von vier Federelementen 15 sind lediglich zwei vorhanden, wobei aber auch Varianten mit mehr als zwei Federelementen möglich sind. Wie bei der dritten Ausführungsform sind die Federelemente 15 im Winkelabstand von 90 Grad angebracht, jedoch im Vergleich zur dritten Ausführungsform um 45 Grad versetzt. Außerdem sind die Federelemente 15 schmaler. Ihre Breite beträgt soviel wie die Hälfte der Differenz aus der Breite der Positionsnuten 11, 13 und der Breite der Innenverzahnungen 5. Auf diese Weise befinden sich in Verschiebestellung beide Federelemente 15 in unterschiedlichen Positionsnuten 11, 13 und in Arretierstellung befinden sie sich in derselben Arretierpositionsnut 11. In beiden Stellungen hat jedes Federelement 15 seitlichen Kontakt zu einer Innenverzahnung 5, so dass die Federköpfe 17 ausreichend fest in der jeweiligen Drehstellung gehalten werden.

Am Ende 14 des inneren Teleskopelements 2 ist in der Mitte zwischen den beiden Federelementen 15 an einem radial federnden Federarm, der sich axial erstreckt, eine Rastnase 23 angebracht. Die Rastnase 23 ist etwas kürzer als die Lücke zwischen zwei Zähnen 6 der Innenverzahnung 5. Die Länge des Federarms ist so bestimmt, dass die Rastnase 23 zwischen zwei Zähne 6 der Innenverzahnung 5 eingreifen kann, während sich die erfindungsgemäße Verbindungsanordnung in Verschiebestellung befindet und wenn die Verschiebeposition einen blockadefreien Wechsel in die Arretierstellung erlaubt. Abseits einer solchen Verschiebeposition ist der Federarm gespannt und liegt auf einem Zahn 6 der Außenverzahnung 5 auf.

Ähnlich wie bei der sechsten Ausführungsform können bei den anderen Ausführungsformen eine Rastnase 23 angebracht werden.

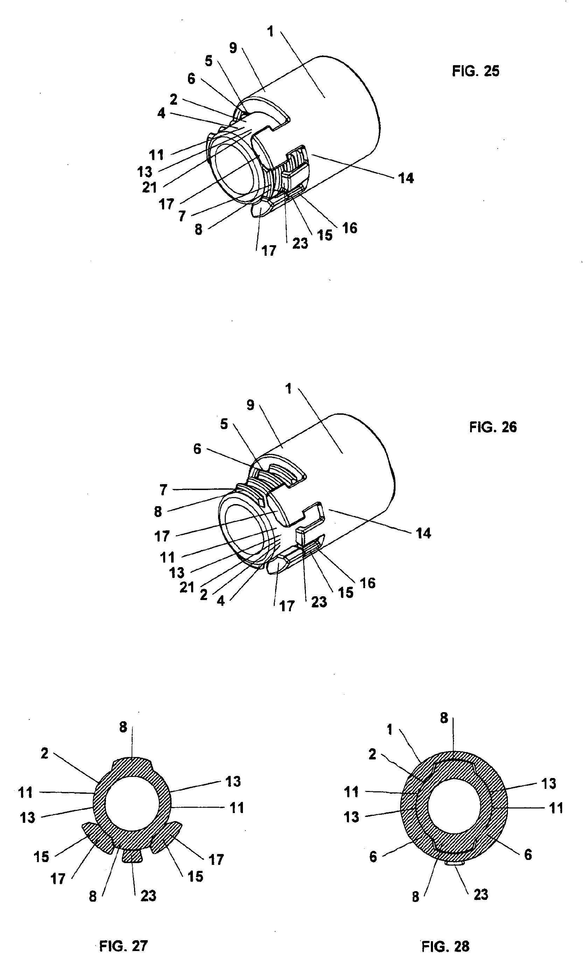

Die Figuren 25 bis 28 zeigen eine siebte Ausführungsform einer erfindungsgemäßen Verbindungsanordnung und werden im folgenden zusammen beschrieben. Bauteile, die mit Bauteilen der sechsten Ausführungsform übereinstimmen, sind mit denselben Bezugszeichen versehen und bei den Figuren zur sechsten Ausführungsform beschrieben.

Die siebte Ausführungsform entspricht in der Funktionsweise der sechsten Ausführungsform. Es sind jedoch die Eigenschaften des äußeren Teleskopelements 1 und die des inneren Teleskopelements 2 vertauscht. Auch aus den Ausführungsformen eins bis fünf, sowie acht, können Ausführungsformen abgeleitet werden, bei denen die Eigenschaften der Teleskopelemente vertauscht sind.

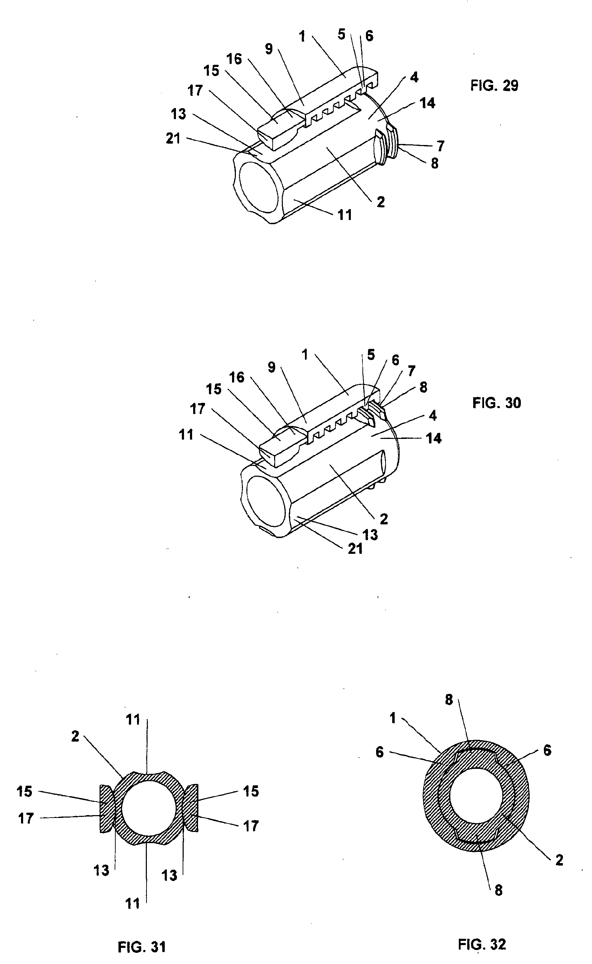

Die Figuren 29 bis 32 zeigen eine achte Ausführungsform einer erfindungsgemäßen Verbindungsanordnung und werden im folgenden zusammen beschrieben. Bauteile, die mit Bauteilen der ersten Ausführungsform übereinstimmen, sind mit denselben Bezugszeichen versehen und bei den Figuren zur ersten Ausführungsform beschrieben.

Das äußere Teleskopelement 1 der achten Ausführungsform unterscheidet sich vom äußeren Teleskopelement der ersten Ausführungsform dadurch, dass sich keine Aussparung 12 in den Zähnen 6 der Innenverzahnungen 5 befinden. Der Winkelabstand zwischen zwei benachbarten Nuten beträgt also 180 Grad statt 90 Grad. Diese Nuten haben keine Funktion als Verschiebepositions-, Arretierpositions- oder Führungsnuten, sondern nur als Bewegungsraum für die Verzahnungen des inneren Teleskopelements 2. Arretierpositionsnuten 11 und Verschiebepositionsnuten 13 befinden sich stattdessen an der Außenfläche 4 am inneren Teleskopelement 2 entlang der Längsachse L an dem Stababschnitt ohne Außenverzahnung 7. Die Arretierpositionsnuten 11 fluchten mit den Außenverzahnungen 7 und die Verschiebepositionsnuten 13 sind zu diesen um 90 Grad versetzt angeordnet. Das Profil der Nuten entspricht dem nach innen gerichteten Teil der Federköpfe 17 an den Federelementen 15. Im Gegensatz zur ersten Ausführungsform befinden sich die Federelemente 15 nicht am inneren Teleskopelements 2, sondern am freien Ende 9 des äußeren Teleskopelements 1 fluchtend mit der Innenverzahnung 5 mit nach innen gerichteten Federköpfen 17.

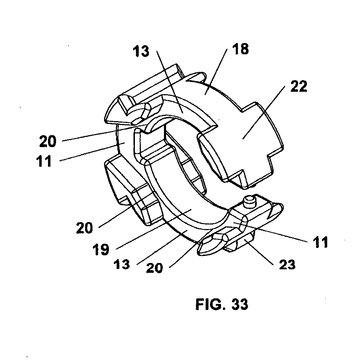

Figur 33 zeigt eine alternative Ausgestaltung eines Führungsschlittens 18. Der Führungsschlitten 18 ist C-förmig gestaltet, so dass er radial zusammengedrückt werden kann. An seiner Außenumfangsfläche 22 weist der Führungsschlitten 18 eine Rastnase 23 auf, die radial nach außen vorsteht. Diese ist über den Umfang betrachtet an einer Stelle angeordnet, dass die Rastnase 23 in Zahnlücken zwischen den Zähnen 6 einer der Innenverzahnung 5 eingreifen kann, wenn sich die erfindungsgemäße Verbindungsanordnung in Verschiebestellung befindet. Die Rastnase 23 kann dadurch eine Zahnlücke verlassen, indem der gesamte Führungsschlitten 18 radial verformt wird und die Rastnase 23 radial verlagert wird. Hierzu befindet sich die Rastnase 23 vorteilhafterweise im Bereich eines freien Endes des C-Profils.

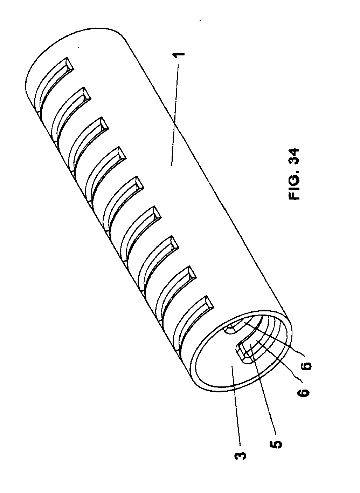

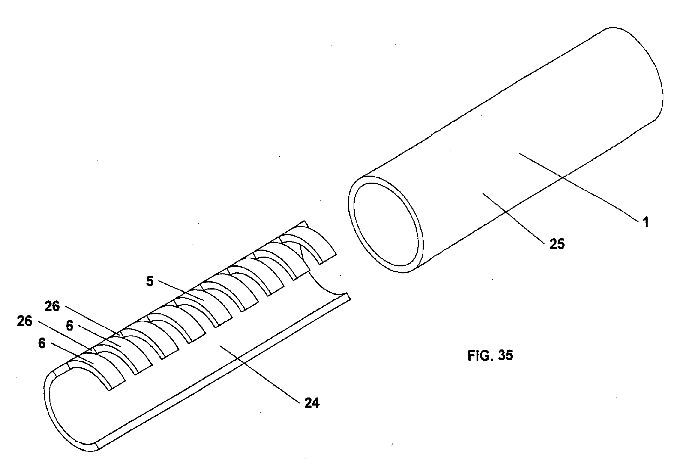

Figur 34 zeigt eine mögliche Ausführungsform eines äußeren Teleskopelements 1. Die Zähne 6 der Innenverzahnung 5 sind hierbei durch einen Umformvorgang in die Wandung eines Rohres eingeprägt. Alternativ kann gemäß der Ausführungsform nach Figur 35 das äußere Teleskopelement 1 ein Innenrohr 24 umfassen, in welches Durchbrüche 26 zum Bilden der Zahnlücken zwischen den Zähnen 6 der Innenverzahnung 5 eingebracht sind. Das Innenrohr 24 ist dann in ein geschlossenes Außenrohr 25 eingeschoben.

### Bezugszeichenliste

- 1: äußeres Teleskopelement
- 2: inneres Teleskopelement
- 3: Innenfläche
- 4: Außenfläche
- 5: Innenverzahnung
- 6: Zahn der Innenverzahnung
- 7: Außenverzahnung
- 8: Zahn der Außenverzahnung
- 9: Ende des äußeren Teleskopelements
- 10: Kragen
- 11: Arretierpositionsnut
- 12: Aussparung
- 13: Verschiebepositionsnut
- 14: freies Ende des inneren Teleskopelements
- 15: Federelement
- 16: Federarm
- 17: Federkopf
- 18: Führungsschlitten
- 19: Bohrung
- 20: umlaufende Nut
- 21: Führungsnut
- 22: Außenumfangsfläche
- 23: Rastnase
- 24: Innenrohr
- 25: Außenrohr
- 26: Durchbruch

## Patentansprüche

1. Teleskopierbare Verbindungsanordnung umfassend
ein rohrförmiges erstes Teleskopelement (1) mit zumindest einer Innenverzahnung (5) mit über einen Teil des Umfangs des ersten Teleskopelements (1) verlaufenden Zähnen (6),
ein zweites Teleskopelement (2) mit zumindest einer Außenverzahnung (7) mit über einen Teil des Umfangs des zweiten Teleskopelements (2) verlaufenden Zähnen (8),
wobei das zweite Teleskopelement (2) in dem ersten Teleskopelement (1) zwischen einer Arretierstellung und einer Verschiebestellung um eine Längsachse (L) drehbar aufgenommen ist,
wobei in der Arretierstellung die zumindest eine Innenverzahnung (5) und die zumindest eine Außenverzahnung (7) miteinander in Eingriff sind und das zweite Teleskopelement (2) im ersten Teleskopelement (1) axial unverschiebbar gehalten ist,
wobei in der Verschiebestellung die zumindest eine Innenverzahnung (5) und die zumindest eine Außenverzahnung (7) außer Eingriff sind und das zweite Teleskopelement (2) innerhalb des ersten Teleskopelements (1) axial verschiebbar ist,
und wobei an einem der beiden Teleskopelemente (2 bzw. 1) zumindest ein Federelement (15) vorgesehen ist,
**dadurch gekennzeichnet,**
**dass** an dem anderen der beiden Teleskopelemente (1 bzw. 2) zumindest eine Verschiebepositionsnut (13) vorgesehen ist,
wobei in Verschiebestellung das zumindest eine Federelement (15) in die zumindest eine Verschiebepositionsnut (13) eingreift.

2. Teleskopierbare Verbindungsanordnung nach Anspruch 1,
**dadurch gekennzeichnet,**
**dass** die zumindest eine Verschiebepositionsnut (13) gleichzeitig als Führungsnut dient
und
das Federelement (15) gleichzeitig als Führungselement dient,
wobei in Verschiebestellung das Federelement (15) bei axialer Verschiebung in der Verschiebepositionsnut (13) geführt wird.

3. Teleskopierbare Verbindungsanordnung nach Anspruch 1,
**dadurch gekennzeichnet,**
**dass** die zumindest eine Verschiebepositionsnut (13) sich an einem Führungsschlitten (18) befindet, welcher Bestandteil des ersten Teleskopelements (1) ist und in diesem axial verschiebbar aufgenommen ist und mit dem zweiten Teleskopelement (2) um die Längsachse drehbar verbunden ist.

4. Teleskopierbare Verbindungsanordnung nach Anspruch 1 oder 2,
**dadurch gekennzeichnet,**
**dass** die zumindest eine Verschiebepositionsnut (13) in einer Innenfläche des ersten Teleskopelements (1) oder
in einer Außenfläche das zweiten Teleskopelements (2) sich axial erstreckend vorgesehen ist.

5. Teleskopierbare Verbindungsanordnung nach Anspruch 1 oder 2,
**dadurch gekennzeichnet,**
**dass** die zumindest eine Verschiebepositionsnut (13)
durch Aussparungen (12) im Bereich einer der Innenverzahnungen (5) des ersten Teleskopelements (1) oder
durch Aussparungen im Bereich einer der Außenverzahnungen (7) des zweiten Teleskopelements (2) sich axial erstreckend vorgesehen ist.

6. Teleskopierbare Verbindungsanordnung nach Anspruch 1 oder 2,
**dadurch gekennzeichnet,**
**dass** die zumindest eine Verschiebepositionsnut (13)
durch einen sich längs erstreckenden verzahnungsfreien Bereich des jeweiligen Teleskopelements gebildet ist, wobei die zumindest eine Verschiebepositionsnut (13) insbesondere zwischen zwei in Umfangsrichtung benachbarten Verzahnungen ausgebildet ist.

7. Teleskopierbare Verbindungsanordnung nach einem der vorangehenden Ansprüche,
**dadurch gekennzeichnet,**
**dass** an demjenigen der beiden Teleskopelemente (1 bzw. 2), welches die Verschiebepositionsnut (13) aufweist, zumindest eine Arretierpositionsnut (11) vorgesehen ist,
wobei in Arretierstellung das zumindest eine Federelement (15) in die Arretierpositionsnut (11) eingreift.

8. Teleskopierbare Verbindungsanordnung nach Anspruch 7,
**dadurch gekennzeichnet,**
**dass** die zumindest eine Arretierpositionsnut (11)
sich an einem Führungsschlitten (18) befindet, welcher Bestandteil des ersten Teleskopelements (1) ist und in diesem axial verschiebbar aufgenommen ist und mit dem zweiten Teleskopelement (2) um die Längsachse drehbar verbunden ist.

9. Teleskopierbare Verbindungsanordnung nach Anspruch 7,
**dadurch gekennzeichnet,**
**dass** die zumindest eine Arretierpositionsnut (11)
in einer Innenfläche des ersten Teleskopelements (1) oder
in einer Außenfläche das zweiten Teleskopelements (2) sich axial erstreckend vorgesehen ist.

10. Teleskopierbare Verbindungsanordnung nach Anspruch 7,
**dadurch gekennzeichnet,**
**dass** die zumindest eine Arretierpositionsnut (11)
durch Aussparungen im Bereich einer der Innenverzahnungen (5) des ersten Teleskopelements (1) oder
durch Aussparungen im Bereich einer der Außenverzahnungen (7) des zweiten Teleskopelements (2) sich axial erstreckend vorgesehen ist.

11. Teleskopierbare Verbindungsanordnung nach Anspruch 7,
**dadurch gekennzeichnet,**
**dass** die zumindest eine Arretierpositionsnut (11)
durch einen sich längs erstreckenden verzahnungsfreien Bereich des jeweiligen Teleskopelements gebildet ist, wobei die zumindest eine Arretierpositionsnut (11) insbesondere zwischen zwei in Umfangsrichtung benachbarten Verzahnungen ausgebildet ist.

12. Teleskopierbare Verbindungsanordnung nach Anspruch 7,
**dadurch gekennzeichnet**,
das die zumindest eine Arretierpositionsnut (11) durch Aussparungen (12) im Bereich zwischen zwei Zähnen der Innenverzahnungen (5) oder der Außenverzahnungen (7) gebildet wird.

13. Teleskopierbare Verbindungsanordnung nach Anspruch 7,
**dadurch gekennzeichnet,**
**dass** die mindestens eine Verschiebepositionsnut (13) an einem der beiden Teleskopelemente (1 bzw. 2) auch als die mindestens eine Arretierpositionsnut (11) dient
wobei an dem anderen der beiden Teleskopelemente (2 bzw. 1) zumindest zwei Federelemente (15) vorgesehen sind.

14. Teleskopierbare Verbindungsanordnung nach einem der vorangehenden Ansprüche 1 bis 13,
**dadurch gekennzeichnet,**
**dass** das zumindest eine Federelement (15) in radialer Richtung federnd ausgebildet ist.

15. Teleskopierbare Verbindungsanordnung nach Anspruch 14,
**dadurch gekennzeichnet,**
**dass** der Federarm (16) an einem freien Ende (14) des zweiten Teleskopelements (2) oder an einem freien Ende (9) des ersten Teleskopelements (1) ausgebildet ist.

16. Teleskopierbare Verbindungsanordnung nach einem der vorangehenden Ansprüche,
**dadurch gekennzeichnet,**
**dass** an einem der beiden Teleskopelemente (2 bzw. 1) zumindest eine federnd angeordnete Rastnase (23) vorgesehen ist, die dazu dient, in Verschiebestellung zwischen zwei Zähne (6 oder 8) der mindestens einen Innenverzahnung (5) oder Außenverzahnung (7) einzugreifen.

17. Teleskopierbare Verbindungsanordnung nach Anspruch 16,
**dadurch gekennzeichnet,**
**dass** die zumindest eine Rastnase (23) an einem der Federelemente (15) vorgesehen ist.

## Claims

1. Telescopic connection arrangement comprising
a tube-like first telescopic element (1) with at least one inner toothing (5) with teeth extending over a part of the circumference of the first telescopic element (1),
a second telescopic element (2) with at least one outer toothing (7) with teeth (8) extending over a part of the circumference of the second telescopic element (2),
wherein the second telescopic element (2) is rotatably accommodated around a longitudinal axis (L) in the first telescopic element (1) between a locking position and a displacement position,
wherein in the locking position the at least one inner toothing (5) and the at least one outer toothing (7) engage each other and wherein the second telescopic element (2) is held axially non-displaceably in the first telescopic element (1),
wherein in the displacement position the at least one inner toothing (5) and the at least one outer toothing (7) are out of engagement and the second telescopic element (2) is axially displaceable within the first telescopic element (1),
and wherein at least one spring element (15) is provided at one of the two telescope elements (2 or 1),
**characterised in**
**that** at least one displacement position groove (13) is provided on the other of the two telescopic elements (1 or 2),
wherein in the displacement position the at least one spring element (15) engages in the at least one displacement position groove (13).

2. Telescopic connection arrangement according to claim 1,
**characterised in**
**that** the at least one displacement position groove (13) serves at the same time as a guide groove and
**that** the spring element (15) serves at the same time as a guide element, wherein in the displacement position the spring element (15) is guided during an axial displacement in the displacement position groove (13).

3. Telescopic connection arrangement according to claim 1,
**characterised in**
**that** the at least one displacement position groove (13) is arranged on a guide sled (18), which forms part of the first telescopic element (1) and is accommodated in the same in an axially displaceable manner and is rotatably connected to the second telescopic element (2) around the longitudinal axis.

4. Telescopic connection arrangement according to claim 1 or 2,
**characterised in**
**that** the at least one displacement position groove (13) is provided in an inner face of the first telescopic element (1) or in an outer face of the second telescopic element (2) in an axially extending manner.

5. Telescopic connection arrangement according to claim 1 or 2,
**characterised in**
**that** the at least one displacement position groove is provided in an axially extending manner by recesses (12) in the area of one of the inner axially extending manner by recesses (12) in the area of one of the inner toothings (5) of the first telescopic element (1) or by recesses in the area of one of the outer toothings (7) of the second telescopic element (2).

6. Telescopic connection arrangement according to claim 1 or 2,
**characterised in**
**that** the at least one displacement position groove (13) is formed by a portion of the respective telescopic element extending in the longitudinal direction and being free of teeth, wherein, in particular, the at least one displacement position groove (13) is formed between two neighbouring toothings in circumferential direction.

7. Telescopic connection arrangement according to one of the preceding claims,
**characterised in**
**that** at least one locking position groove (11) is provided on that of the two telescopic elements (1 or 2), which has the displacement position groove (13),
wherein the at least one spring element (15) engages in the locking position groove (11) in the locking position.

8. Telescopic connection arrangement according to claim 7,
**characterised in**
**that** the at least one locking position groove (11) is arranged on a guide sled (18), which is part of the first telescopic element (1) and is axially displaceably accommodated in the same and is rotatably connected to the second telescopic element (2) around the longitudinal axis.

9. Telescopic connection arrangement according to claim 7,
**characterised in**
**that** the at least one locking position groove (11) is provided in an axially extending manner in an inner face of the first telescopic element (1) or in an outer face of the second telescopic element (2).

10. Telescopic connection arrangement according to claim 7,
**characterised in**
**that** the at least one locking position groove (11) is provided in an axially extending manner by recesses in the area of one of the inner toothings (5) of the first telescopic element (1) or
by recesses in the area of one of the outer toothings (7) of the second telescopic element (2).

11. Telescopic connection arrangement according to claim 7,
**characterised in**
**that** the at least one locking position groove (11) is formed by means of a portion of the respective telescopic element extending longitudinally and being free of teeth, wherein the at least one locking position groove (11) is especially formed between two neighbouring toothings in the circumferential direction.

12. Telescopic connection arrangement according to claim 7,
**characterised in**
**that** the at least one locking position groove (11) is formed by recesses (12) in the area between two teeth of the inner toothings (5) or the outer toothings (7).

13. Telescopic connection arrangement according to claim 7,
**characterised in**
**that** the at least one displacement position groove (13) on one of the two telescopic elements (1 or 2) serves also as the at least one locking position groove (11),
wherein at least two spring elements (15) are provided on the other of the two telescopic elements (2 or 1).

14. Telescopic connection arrangement according to one of the preceding claims 1 to 13,
**characterised in**
**that** the at least one spring element (15) is formed elastic in a radial direction.

15. Telescopic connection arrangement according to claim 14,
**characterised in**
**that** the spring arm (16) is formed on a free end (14) of the second telescopic element (2) or on a free end (9) of the first telescopic element (1).

16. Telescopic connection arrangement according to one of the preceding claims,
**characterised in**
**that** at least one elastic locking projection (23) is provided on one of the two telescopic elements (2 or 1), which serves to engage in the displacement position between two teeth (6 or 8) of the at least one inner toothing (5) or outer toothing (7).

17. Telescopic connection arrangement according to claim 16,
**characterised in**
**that** the at least one locking projection (23) is provided on one of the spring elements (15).

## Revendications

1. Dispositif de raccordement télescopique, comprenant :
un premier élément télescopique de forme tubulaire (1) comportant au moins une denture interne (5) dont les dents (6) s'étendent sur une partie de la circonférence du premier élément télescopique (1),
un second élément télescopique (2) comportant au moins une denture externe (5) dont les dents (6) s'étendent sur une partie de la circonférence du second élément télescopique (2),
le second élément télescopique (2) étant reçu en rotation dans le premier élément télescopique (1) entre une position d'arrêt et une position de déplacement en rotation autour d'un axe longitudinal (L),
l'au moins une denture interne (5) et l'au moins une denture externe (5) étant, en position d'arrêt, en prise l'une avec l'autre et le second élément télescopique (2) étant maintenu sans mobilité axiale dans le premier élément télescopique (1),
l'au moins une denture interne (5) et l'au moins une denture externe (5) étant hors prise en position de déplacement et le second élément télescopique (2) étant mobile axialement à l'intérieur du premier élément télescopique (1),
au moins un élément à ressort (15) étant prévu sur un des deux éléments télescopiques (2 ou 1),
**caractérisé en ce que**,
sur l'autre des deux éléments télescopiques (1 ou 2), il est prévu au moins une rainure de positionnement de déplacement (13),
l'au moins un élément à ressort (15) s'engrenant dans l'au moins une rainure de positionnement de déplacement (13) en position de déplacement.

2. Dispositif de raccordement télescopique selon la revendication 1,
**caractérisé en ce que**
l'au moins une rainure de positionnement de déplacement (13) sert en même temps de rainure de guidage et
que l'élément à ressort (15) sert en même temps d'élément de guidage,
l'élément à ressort (15) étant, en position de déplacement, guidé dans la rainure de positionnement de déplacement (13) lors de son déplacement axial.

3. Dispositif de raccordement télescopique selon la revendication 1,
**caractérisé en ce que**
l'au moins une rainure de positionnement de déplacement (13) se trouve dans un patin de guidage (18) qui fait partie intégrante du premier élément télescopique (1) et est reçu de manière à être mobile axialement dans celui-ci et est relié au second élément télescopique (2) en rotation autour de l'axe longitudinal.

4. Dispositif de raccordement télescopique selon la revendication 1 ou 2,
**caractérisé en ce que**
l'au moins une rainure de positionnement de déplacement (13) est conçue de manière à s'étendre axialement dans une surface interne du premier élément télescopique (1) ou
dans une surface externe du second élément télescopique (2).

5. Dispositif de raccordement télescopique selon la revendication 1 ou 2,
**caractérisé en ce que**
l'au moins une rainure de positionnement de déplacement (13) est conçue de manière à s'étendre axialement dans des évidements (12) au niveau d'une des dentures internes (5) du premier élément télescopique (1) ou
dans des évidements au niveau d'une des dentures externes (7) du second élément télescopique (2).

6. Dispositif de raccordement télescopique selon la revendication 1 ou 2,
**caractérisé en ce que**
l'au moins une rainure de positionnement de déplacement (13) est constituée par une partie dépourvue de denture et s'étendant longitudinalement de l'élément télescopique respectif, l'au moins une rainure de positionnement de déplacement (13) étant réalisée notamment entre deux dentures voisines dans le sens circonférentiel.

7. Dispositif de raccordement télescopique selon une des revendications précédentes,
**caractérisé en ce que**
sur celui des deux éléments télescopiques (1 ou 2) qui présente la rainure de positionnement de déplacement (13), il est prévu au moins une rainure de positionnement d'arrêt (11),
l'au moins un élément à ressort (15) s'engrenant en position d'arrêt dans la rainure de positionnement de d'arrêt (11).

8. Dispositif de raccordement télescopique selon la revendication 7,
**caractérisé en ce que**
l'au moins une rainure de positionnement d'arrêt (11) se trouve sur un patin de guidage (18) qui fait partie intégrante du premier élément télescopique (1) et est reçu de manière à être mobile axialement dans celui-ci et est relié au second élément télescopique (2) en rotation autour de l'axe longitudinal.

9. Dispositif de raccordement télescopique selon la revendication 7,
**caractérisé en ce que**
l'au moins une rainure de positionnement d'arrêt (11) est conçue de manière à s'étendre axialement dans une surface interne du premier élément télescopique (1) ou dans une surface externe du second élément télescopique (2).

10. Dispositif de raccordement télescopique selon la revendication 7,
**caractérisé en ce que**
l'au moins une rainure de positionnement d'arrêt (11) est conçue de manière à s'étendre axialement dans des évidements au niveau d'une des dentures internes (5) du premier élément télescopique (1) ou
dans des évidements au niveau d'une des dentures externes (7) du second élément télescopique (2).

11. Dispositif de raccordement télescopique selon la revendication 7,
**caractérisé en ce que**
l'au moins une rainure de positionnement d'arrêt (11) est constituée par une partie dépourvue de denture et s'étendant longitudinalement de l'élément télescopique respectif, l'au moins une rainure de positionnement d'arrêt (11) étant réalisée notamment entre deux dentures voisines dans le sens circonférentiel.

12. Dispositif de raccordement télescopique selon la revendication 7,
**caractérisé en ce que**
l'au moins une rainure de positionnement d'arrêt (11) est constituée par des évidements (12) dans la zone située entre deux dents des dentures internes (5) ou des dentures externes (7).

13. Dispositif de raccordement télescopique selon la revendication 7,
**caractérisé en ce que**
l'au moins une rainure de positionnement de déplacement (13), au niveau d'un des deux éléments télescopiques (1 ou 2) faut aussi office d'au moins une rainure de positionnement d'arrêt (11),
au moins deux éléments à ressort (15) étant prévus au niveau de l'autre des deux éléments télescopiques (2 ou 1).

14. Dispositif de raccordement télescopique selon une des revendications précédentes 1 à 13,
**caractérisé en ce**
**qu'**au moins un élément à ressort (15) a une conformation élastique dans le sens radial.

15. Dispositif de raccordement télescopique selon la revendication 14,
**caractérisé en ce que**
le bras de ressort (16) est constitué à une extrémité libre (14) du second élément télescopique (2) ou à une extrémité libre (9) du premier élément télescopique (1).

16. Dispositif de raccordement télescopique selon une des revendications précédentes,
**caractérisé en ce**
**qu'**il est prévu sur un des deux éléments télescopiques (2 ou 1) au moins un bec d'enclenchement disposé élastiquement (23) qui a pour fonction de s'engrener en position de déplacement entre deux dents (6 ou 8) de l'au moins une denture interne (5) ou denture externe (7).

17. Dispositif de raccordement télescopique selon la revendication 16,
**caractérisé en ce que**
l'au moins un bec d'enclenchement (23) est prévu sur un des éléments à ressort (15).
